# EUROPÄISCHE PATENTANMELDUNG

(11) **EP 4 102 832 A1**
(43) Veröffentlichungstag der Anmeldung: **14.12.2022**
(21) Anmeldenummer: 21184569.8
(22) Anmeldetag: 08.07.2021
(51) Int. Cl.: H04N 7/14

(54) **VIDEOKONFERENZ-SYSTEM ZUM DURCHFÜHREN EINER VIDEOKONFERENZ UND ZUM FASSEN VON BESCHLÜSSEN**

(30) Priorität: 10.06.2021 DE 102021115044
(71) Anmelder: eyeson GmbH, 8010 Graz (AT)
(72) Erfinder: Kröpfl, Andreas, 8042 Graz (AT)
(74) Vertreter: Canzler & Bergmeier Patentanwälte Partnerschaft mbB

(57) **Zusammenfassung**

Die Erfindung betrifft ein Videokonferenz-System (1) zum Durchführen einer Videokonferenz (9) umfassend: einen als Software realisierten Videokonferenzserver (2) zum Steuern der dem Videokonferenz-System (1) zugrundeliegenden Befehle, ein als Software realisiertes Beschlussermittlungsmodul (8) zum Ermitteln von Beschlüssen (10) auf Basis einer Abstimmung durch stimmberechtigte, mit dem Videokonferenzserver (2) verbundene Videokonferenz-Teilnehmer (3; 4 - 6), zumindest ein als Software realisiertes Authentifizierungsmodul (7) zum Authentifizieren der Videokonferenz-Teilnehmer (3; 4-6) und zumindest ein als Software realisiertes Abstimmungsmodul (16) zum Erfassen der Stimmen (11) von den für die Abstimmung vorgesehenen Videokonferenz-Teilnehmern (3; 4-6), wobei von dem Abstimmungsmodul (16) die Stimmen (11) in digitalisierter Form an das Beschlussermittlungsmodul (8) übermittelt werden und das Beschlussermittlungsmodul (8) ausgebildet und eingerichtet ist, eine digitalisierte Stimme (11) eines Videokonferenz-Teilnehmers (3; 4-6) erst dann zur Ermittlung des Beschlusses zuzulassen, wenn die entsprechende digitalisierte Stimme (11) zusammen mit einer digitalen Authentifizierung oder Authentifizierungsanforderung des entsprechenden Teilnehmers (3; 4-6) von diesem gesendet wird und/oder beim Beschlussermittlungsmodul (8) eingeht. Außerdem betrifft die Erfindung ein Verfahren zum Durchführen einer Videokonferenz (9).

## Beschreibung

Die Erfindung betrifft ein Videokonferenz-System und ein Verfahren zum Durchführen einer Videokonferenz mit einem derartigen System.

Videokonferenz-Systeme sind seit längerem bekannt. Sie dienen zur Kommunikation über große Distanzen, wobei sich die Beteiligten jeweils über einen Teilnehmercomputer (häufig auch Client oder lediglich Computer genannt) austauschen. Hierbei werden generelle Daten sowie Audio- und Video-Ströme ausgetauscht. Generelle Daten sind beispielsweise PowerPoint-Folien oder pdf-Dokumente, die ein Moderator in das System einspielt und welche die übrigen Teilnehmer auf ihrem jeweiligen Computerbildschirm sehen. Audio- und Videoströme (Engl.: Audio-/Video-Streams) können insbesondere die mit entsprechender Kamera und Mikrofon aufgenommenen und zur Übertragung digitalisierten Personenabbilder bzw. deren Gesichter und deren mündliche Beiträge sein.

Das hier beschriebene Videokonferenz-System dient nun insbesondere dazu, über die Videokonferenz Beschlüsse zu fassen. Derartige Beschlüsse basieren auf Abstimmungen, welche unter den Teilnehmern der Videokonferenz oder unter einer Gruppe der Teilnehmer der Videokonferenz durchgeführt werden. Mitunter können Beschlüsse weitreichende, auch rechtliche Folgen haben, wenn über Gesetze oder ähnliches abgestimmt wird. Dabei ist stets sicherzustellen, dass, insbesondere im Falle von Gesetzen, nur die für die Abstimmung vorgesehenen Personen abstimmen. Aufgrund einer gewissen Anonymität bei Videokonferenzen wird es jedoch erschwert, die korrekten Identitäten der Teilnehmer festzustellen. Es sollte stets überprüft werden, ob die Identität der abstimmenden Person auch mit der Identität der Person übereinstimmt, welche abstimmen darf bzw. soll. Es sind solche Personen zu erkennen oder auszuschließen, welche die Abstimmung manipulieren oder über ihre korrekte Identität täuschen wollen, um die Abstimmung zu ihren Gunsten zu beeinflussen. Derartige Personen, welche die Abstimmung auf unerlaubte Weise beeinflussen, indem sie eine falsche Identität vorgeben oder ihre Identität fälschen, werden im Folgenden Manipulatoren oder Fälscher genannt. Eine Möglichkeit zur Überprüfung der Identität des Teilnehmers ist es, dass ein individuelles Passwort an dafür vorgesehenen Stellen eingegeben wird. Jedoch weist dieses Verfahren Schwächen hinsichtlich der Sicherheit auf.

Bisher ist kein Videokonferenz-System bekannt geworden, welche alle Bedürfnisse der Nutzer befriedigt. Es ist daher die Aufgabe der vorliegenden Erfindung, ein einfaches, aber manipulationssicheres Videokonferenz-System zur Verfügung zu stellen.

Diese Aufgabe wird gelöst durch die Merkmale der unabhängigen Patentansprüche.

Vorgeschlagen wird ein Videokonferenz-System zum Durchführen einer Videokonferenz sowie ein entsprechendes Verfahren.

Das Videokonferenz-System umfasst einen als Software realisierten Videokonferenzserver zum Steuern der dem Videokonferenz-System zugrundeliegenden Befehle. Der Videokonferenzserver ist in bekannter Weise zum Empfangen von Audio- und/oder Video-Strömen von mehreren oder allen Teilnehmern der Videokonferenz ausgebildet, einschließlich eines Vortragenden oder des Moderators der Videokonferenz, sowie zum Aufbereiten und Übertragen entsprechender Audio-/Videoströme. Audio- und Videoströme (Engl.: Audio-/Video-Streams) können insbesondere die mit entsprechender Kamera und Mikrofon aufgenommenen und zur Übertragung digitalisierten Personenabbilder bzw. deren Gesichter und deren mündliche Beiträge sein. Vorteilhafterweise ist der Videokonferenzserver auch dazu ausgebildet und eingerichtet, Videokonferenzen getrennt von Abstimmungen und/oder Beschlussfassungen durchzuführen.

Des Weiteren umfasst das Videokonferenz-System ein als Software realisiertes Beschlussermittlungsmodul zum Ermitteln von Beschlüssen auf Basis einer Abstimmung durch stimmberechtigte mit dem Videokonferenzserver verbundene Videokonferenz-Teilnehmer. Mit Hilfe des Beschlussermittlungsmoduls kann somit ein Beschluss ermittelt werden, zu dem mehrere stimmberechtigte Teilnehmer ihre entsprechende digitale Stimme abgegeben haben.

Weiterhin umfasst das Videokonferenz-System zumindest ein als Software realisiertes Authentifizierungsmodul zum Authentifizieren von Videokonferenz-Teilnehmern. Mit Hilfe des Authentifizierungsmoduls wird überprüft, ob der Videokonferenz-Teilnehmer auch der Person entspricht, für welche sie sich ausgibt. Der Einfachheit halber können die Videokonferenz-Teilnehmer auch lediglich als Teilnehmer bezeichnet werden.

Außerdem umfasst das Videokonferenz-System zumindest ein als Software realisiertes Abstimmungsmodul zum Erfassen der Stimmen von für die Abstimmung vorgesehenen Videokonferenz-Teilnehmern, wobei von dem Abstimmungsmodul die Stimmen in digitalisierter Form an das Beschlussermittlungsmodul übermittelt werden und das Beschlussermittlungsmodul ausgebildet und eingerichtet ist, eine digitalisierte Stimme eines Videokonferenz-Teilnehmers erst dann zur Ermittlung des Beschlusses zuzulassen, wenn die entsprechende digitalisierte Stimme zusammen mit einer Authentifizierung oder einer Authentifizierungsanforderung des entsprechenden Teilnehmers von diesem gesendet wird und/oder beim Beschlussermittlungsmodul eingeht.

Oben genannte Fälle, dass sich beispielsweise eine andere Person, also z.B. ein Manipulator oder Fälscher, Zugang zum Computer verschafft, können somit nahezu ausgeschlossen werden, da die Stimme erst dann gewertet wird, wenn diese zusammen mit der Authentifizierung (oder einer Authentifizierungsanforderung) vom entsprechenden abstimmenden Teilnehmer gesendet wird und/oder beim Beschlussermittlungsmodul eingeht. Beispielsweise ist bei der oder für die Stimmabgabe am Computer bei der Videokonferenz eine gleichzeitige eigene Authentifizierung gefordert.

Besonders bevorzugt ist es, wenn die digitalisierte Stimme jedes abstimmenden Teilnehmers und dessen Authentifizierung in einem gemeinsamen Datenpaket von dem Teilnehmer gesendet werden oder beim Beschlussermittlungsmodul eingehen. Eine Manipulation eines solchen Datenpakets, das beispielsweise im Computer des jeweiligen Teilnehmers oder einem zwischen diesem Teilnehmer-Computer und dem Beschlussermittlungsmodul geschalteten Softwaremodul erstellt werden kann, ist nahezu ausgeschlossen. Vorteilhafterweise kann dieses Datenpaket verschlüsselt sein.

Beim Senden einer Authentifizierungsanforderung zusammen mit der Stimmabgabe kann die Stimme beispielsweise zum Beschlussermittlungsmodul und die Authentifizierungsanforderung über das Authentifizierungsmodul an eine Authentifizierungsvorrichtung weitergeleitet werden. Die Authentifizierungsvorrichtung leitet z.B., nach Authentifizierung dieses Teilnehmers, die Authentifizierung an das Beschlussermittlungsmodul weiter, beispielsweise entweder direkt oder zunächst über das Authentifizierungsmodul. Im letzteren Fall kann anschließend das Authentifizierungsmodul die Authentifizierung beispielsweise direkt an das Beschlussermittlungsmodul senden oder zunächst an das Abstimmungsmodul und dieses dann die Authentifizierung, vorzugsweise zusammen mit der digitalisierten Stimme, an das Beschlussermittlungsmodul.

Es ist auch möglich, nach aufgrund der Authentifizierungsanforderung erfolgter Authentifizierungsbestätigung die Authentifizierung an den Teilnehmer zurückzuschicken. Bei der Stimmabgabe wird dann diese Authentifizierung zusammen mit der Stimme, beispielsweise in einem gemeinsamen Datenpaket, an das Beschlussermittlungsmodul gesendet, wo dann dementsprechend Stimme und Authentifizierung zusammen eingehen.

Das Beschlussermittlungsmodul ist besonders bevorzugt derart ausgebildet und eingerichtet, dass es vom Authentifizierungsmodul nicht-autorisierte Teilnehmer die Möglichkeit zur Abstimmung über die Beschlüsse und/oder die Möglichkeit für Änderungen der Beschlüsse und/oder der Beschlussvorlagen verweigern kann. Derartige nicht-autorisierte Teilnehmer sind beispielsweise lediglich Zuschauer einer öffentlichen Videokonferenz zur Abstimmung über ein Gesetz oder ähnliches. Diese Zuschauer können lediglich an der Videokonferenz teilnehmen, jedoch beispielsweise keine Beschlussvorlagen ändern oder über diese abstimmen.

Vorteilhaft ist es, wenn das Videokonferenz-System mehrere Authentifizierungsmodule umfasst, wobei zumindest den für die Abstimmung vorgesehenen Videokonferenz-Teilnehmern ein, vorzugsweise jeweils ein, Authentifizierungsmodul zugeordnet ist. Somit ist jedem für die Abstimmung vorgesehenen Videokonferenz-Teilnehmer ein, vorzugsweise genau ein, Authentifizierungsmodul zugeordnet, mittels dem der entsprechende Teilnehmer sich authentifiziert. Dadurch wird die Sicherheit bei der Abstimmung weiter erhöht, da bei einem Fälschungsversuch von mehreren Stimmen ein Zugriff auf mehrere Authentifizierungsmodule erfolgen muss.

Zusätzlich oder alternativ ist es von Vorteil, wenn das Videokonferenz-System mehrere Abstimmungsmodule umfasst, wobei zumindest den für die Abstimmung vorgesehenen Videokonferenz-Teilnehmern ein, vorzugsweise genau ein, Abstimmungsmodul zugeordnet ist. Auch hierdurch wird die Sicherheit erhöht, da bei einem Fälschungsversuch von mehreren Stimmen ein Zugriff auf mehrere Abstimmungsmodule erfolgen muss.

Von Vorteil ist es, wenn das Beschlussermittlungsmodul derart eingerichtet und ausgebildet ist, die erfassten Stimmen auszuwerten und anhand der Auswertung den Beschluss zu ermitteln. Beispielsweise wird hierbei ein Verhältnis aus den abgegebenen und/oder aus den zur Abstimmung zugelassenen Stimmen ermittelt, anhand dessen der Beschluss gefasst bzw. ermittelt oder abgelehnt wird. Auch ist das Beschlussermittlungsmodul vorteilhafterweise in der Lage, die Gültigkeit von abgegebenen Stimmen festzustellen. Beispielsweise kann auf diese Weise verhindert werden, dass eine doppelt abgegebene Stimme doppelt gewertet wird. Das Beschlussermittlungsmodul kann vorzugsweise auch die Stimme ablehnen, wenn die Authentifizierung nicht eingegangen ist oder wenn die Authentifizierung nicht zur abstimmenden Person passt.

Von Vorteil ist es, wenn das Authentifizierungsmodul mit einer Authentifizierungsvorrichtung beim Teilnehmer verbunden und/oder verbindbar ist, wobei die Authentifizierungseinheit vorzugsweise ein Biometrikscanner, ein Kartenscanner und/oder eine Kamera ist. Dadurch erhält der Teilnehmer die Möglichkeit, sich physisch an der Authentifizierungsvorrichtung zu authentifizieren. Als Biometrikscanner kann beispielsweise ein Fingerabdrucksensor dienen. Mittels der Kamera können ebenfalls biometrische Daten erfasst werden, wie beispielsweise eine Erkennung des Gesichts oder eine Erkennung der Iris eines Auges. Weiterhin kann die Authentifizierungsvorrichtung auch ein Mikrofon sein, mittels dem eine Stimmerkennung zur Authentifizierung durchgeführt werden kann.

Zum Empfang der digitalisierten Stimmen der jeweiligen Teilnehmer sind deren Computer vorzugsweise über das Internet mit dem Beschlussermittlungsmodul verbunden. Auch andere Netzwerke können eingesetzt werden, z.B. ein Intranet.

Von Vorteil ist es, wenn das Beschlussermittlungsmodul und/oder das Abstimmungsmodul derart ausgebildet und eingerichtet ist, dass es bei Stimmabgabe eines Teilnehmers die Authentifizierung dieses Teilnehmers abfragen und/oder anfordern kann, wobei die Stimme nur dann tatsächlich als abgegeben gilt, wenn diese Stimme dann nachfolgend mit der besagten Authentifizierung des entsprechenden Teilnehmers beim Beschlussermittlungsmodul eingeht. Dadurch können die Sicherheit bzw. die Vertrauenswürdigkeit der daraufhin erhaltenen Stimme erhöht werden, da es für Personen, welche die Stimmabgabe manipulieren wollen, erschwert wird, die Authentifizierung zu fälschen, abzufangen oder sich für die stimmabgebende Person auszugeben.

Vorteilhaft ist es, wenn das Beschlussermittlungsmodul derart ausgebildet und eingerichtet ist, dass es die Abstimmung und/oder den ermittelten Beschluss an die Videokonferenz-Teilnehmer übermitteln kann. Dadurch können den Teilnehmern der Videokonferenz die Ergebnisse oder Zwischenstände der Abstimmung mitgeteilt werden. Infolgedessen können beispielsweise die abstimmenden Teilnehmer selbst die eigene Stimmabgabe überprüfen oder Einspruch oder Ähnliches einlegen. Einspruch oder Ähnliches können zusätzlich auch andere Teilnehmer einlegen, die beispielsweise lediglich an der Videokonferenz teilnehmen, ohne abzustimmen. Beispielsweise kann das Beschlussermittlungsmodul mit der Übermittlung der Abstimmung und/oder den ermittelten Beschlüssen auch die entsprechenden mit der Stimme eingegangenen Authentifizierungen übermitteln, so dass die Teilnehmer die Authentifizierungen gegenprüfen können.

Von Vorteil ist es, wenn das Authentifizierungsmodul ein Captcha, ein Passwort, biometrische Daten und/oder Zugangsdaten zur Videokonferenz von den Teilnehmern zur Authentifizierung abfragen kann. Mit Hilfe eines Captchas kann unterschieden werden, ob die Stimmabgabe von einem Computer oder von einem Menschen stammt. Insbesondere die biometrischen Daten können verwendet werden, um mit hoher Sicherheit feststellen zu können, dass die abstimmende Person auch der Person entspricht, deren Identität sie vorgibt. Biometrische Daten können beispielsweise Fingerabdrücke, Gesichtserkennung oder Iriserkennung sein. Manipulatoren oder Fälscher können damit sehr gut ausgeschlossen werden. Mit Hilfe eines Passworts kann eine doppelte Verifikation bzw. eine Zwei-Faktor- Authentifikation durchgeführt werden.

Ferner ist es auch möglich, dass von den Teilnehmern Zugangssysteme wie beispielsweise eine Bürgerkarte, Ordinationskarte oder eine Smartphone-Signatur abgefragt werden. Auch eine sogenannte Abfrage über eine allgemeine zertifizierte Authentifizierungsstelle ist möglich. Eine allgemeine zertifizierte Authentifizierungsstelle ist beispielsweise ein System eines österreichischen Unternehmens mit dem Namen A-Trust. Mittels einer allgemeinen zertifizierten Authentifizierungsstelle können qualifizierte Zertifikate auf Basis einer elektronischen Signatur erfolgen.

Vorteilhaft ist es, wenn das Authentifizierungsmodul eine Verbindung zu einem Identifikationsserver herstellen kann oder aufweist, um die Teilnehmer identifizieren zu können. Ein derartiger Identifikationsserver kann beispielsweise ein Amtsserver oder eine gesicherte Institution, bei dem die Identität oder auch die biometrischen Daten zumindest der abzustimmenden Teilnehmer hinterlegt sind. Derartige Stellen sind meistens besonders gut gegen unerlaubtes Eindringen oder Schadsoftware gesichert, so dass diese Identitäten der abzustimmenden Personen schwer zu manipulieren sind, um die Abstimmung zu beeinflussen. Außerdem werden dadurch die biometrischen Daten an einer vom Videokonferenz-System getrennten Stelle gespeichert, so dass selbst bei einem unerlaubten Eindringen in das Videokonferenz-System die biometrischen Daten sicher bleiben.

Von Vorteil ist es, wenn das Authentifizierungsmodul die Teilnehmer kontinuierlich und/oder in Zeitintervallen authentifizieren kann. Beispielsweise müssen sich die Teilnehmer kontinuierlich und/oder in Zeitintervallen authentifizieren, was die Sicherheit gegen Eindringen oder gegen die fremde Übernahme des Computers eines Teilnehmers erhöht. Dabei können beispielsweise Passwörter in Zeitintervallen, von beispielsweise fünf oder zehn Minuten, abgefragt werden. Die biometrischen Daten sind ein Beispiel, welche kontinuierlich abgefragt werden können. Beispielsweise kann mittels einer Kamera, welche für die Videokonferenz verwendet wird, kontinuierlich das Gesicht des Teilnehmers erkannt oder eine Iriserkennung durchgeführt werden.

Vorteilhaft ist es, wenn das Beschlussermittlungsmodul derart ausgebildet und eingerichtet ist, dass es vor der Stimmabgabe eine Beschlussvorlage an zumindest die stimmberechtigten Teilnehmer übermitteln kann. Dadurch wird den Teilnehmern der Beschluss vorab mitgeteilt, über den sie dann in der Folge abstimmen.

Von Vorteil ist es, wenn das Beschlussermittlungsmodul derart ausgebildet und eingerichtet ist, dass es eine entsprechende Dokumentation zur Beschlussvorlage eines zu fassenden Beschlusses erstellen und/oder an die Teilnehmer übermitteln kann. In der Dokumentation können insbesondere Daten zur Authentifizierung und der Stimmabgabe gespeichert werden, so dass auch noch im Nachhinein das Zustandekommen des Beschlusses überprüft werden kann.

Vorteilhaft ist es, wenn das Beschlussermittlungsmodul derart ausgebildet und eingerichtet ist, dass es Beschlussänderungen erstellen und/oder an die Teilnehmer übermitteln kann. Ferner kann das Beschlussermittlungsmodul eine entsprechende Dokumentation der Beschlussänderungen erstellen und/oder an die Teilnehmer übermitteln, beispielsweise in einem pdf-Format. Bei einer Diskussion, insbesondere während der Videokonferenz, über den abzustimmenden Beschluss können auch Änderungen des Beschlusses bestimmt werden, welche vom Beschlussermittlungsmodul erstellt bzw. erfasst werden und/oder an die Teilnehmer zur Information und/oder zur erneuten Abstimmung übermittelt werden.

Von Vorteil ist es, wenn das Beschlussermittlungsmodul derart ausgebildet und eingerichtet ist, dass es Stimmabgaben von, insbesondere authentifizierten, stimmberechtigten Teilnehmern nach einer Abstimmung mit aufnehmen kann. Es kann sein, dass Personen, welche zur Stimmabgabe vorgesehen sind, zum Termin der Abstimmung nicht verfügbar sind. Deren Stimmen können dann im Nachhinein mitaufgenommen werden. Ferner kann hierdurch für die Stimmabgabe ein gewisser Zeitbereich festgelegt werden, in welchem die Stimmen eingehen müssen, um für die Abstimmung mitaufgenommen zu werden.

Vorteilhaft ist es, wenn das Beschlussermittlungsmodul derart ausgebildet und eingerichtet ist, dass es nach einem ermittelten bzw. gefassten Beschluss diesen, und vorzugsweise eine entsprechende Dokumentation, an zumindest die stimmberechtigten Teilnehmer, insbesondere an alle Teilnehmer der Videokonferenz, übermitteln kann. Dadurch kann den entsprechenden Teilnehmern mitgeteilt werden, wie die Abstimmung abgeschlossen wurde und ob der Beschluss angenommen oder abgelehnt wurde.

Von Vorteil ist es, wenn das Beschlussermittlungsmodul derart ausgebildet und eingerichtet ist, dass es, insbesondere vom Authentifizierungsmodul authentifizierten, änderungsbefugten Teilnehmern ermöglicht, Beschlüsse und/oder Beschlussvorlagen zu ändern. Es kann sein, dass nicht alle stimmberechtigten Teilnehmer auch änderungsbefugte Teilnehmer sind, so dass zwischen diesen, insbesondere vom Beschlussermittlungsmodul und/oder vom Authentifizierungsmodul, unterschieden werden muss. Dadurch können Fehler bei Abstimmung und/oder bei Beschlussfindung vermieden werden.

Vorteilhaft ist es, wenn der Videokonferenzserver derart ausgebildet und eingerichtet ist, den Videokonferenz-Teilnehmern, Abstimmungen und/oder Beschlussfassungen insbesondere auf den Bildschirmen der Teilnehmer-Computer anzuzeigen.

Von Vorteil ist es, wenn der Videokonferenzserver ein als Software realisiertes Anmerkungssystem aufweist, das unter Verwendung einer Datenbank derart ausgelegt und eingerichtet ist, digitale Anmerkungen, vorzugsweise einschließlich Verpflichtungen, der Teilnehmercomputer entgegenzunehmen, zu verwalten und/oder zu speichern. Die Anmerkungen dienen beispielsweise zur Protokollierung von Einsprüchen, Anmerkungen und/oder Änderungen.

Vorteilhaft ist es, wenn der Videokonferenzserver ein als Software realisiertes Protokollierungsmodul umfasst, dass derart ausgebildet und eingerichtet ist, dass eine digitale Dokumentation der Beschlussfassung, vorzugsweise in Form eines digitalen Protokolls der Videokonferenz mit beispielsweise den Beschlüssen, den Beschlussvorlagen, den Beschlussänderungen, den Authentifizierungen und/oder Zertifikaten erstellt werden kann. Dadurch kann beispielsweise ein vollständiges Protokoll bzw. Protokolldokument mit allen relevanten Informationen, d.h. der Abstimmung, dem Stimmeingang, der Authentifizierung und/oder den gezeigten Präsentationen, ggf. den Audio- und Videoströmen der Konferenzteilnehmer, den Zeitstempeln zu den verschiedenen Ereignissen der Videokonferenz, den Notizen bzw. Anmerkungen der Teilnehmer usw., erstellt und bereitgestellt werden, insbesondere eine digitale Signierung des Protokolldokuments. Das Protokoll bzw. das Protokolldokument kann dann elektronisch, z.B. via E-Mail, versandt und/oder ausgedruckt werden. Es enthält vorzugsweise auch Informationen zur Stimmabgabe und/oder Authentifizierung. Vorteilhafterweise lässt sich das Protokoll sowohl online als auch offline zur Videokonferenz signieren.

Von Vorteil ist es, wenn der Videokonferenzserver empfangene und versendete Daten, insbesondere Einträge und/oder Änderungen, der Dokumentation und/oder deren Einträge mit einem Zeitstempel versehen kann. Dadurch kann das Verfahren zur Beschlussfindung besser nachvollzogen werden.

Vorteilhaft ist es, wenn der Videokonferenzserver empfangene und versendete Daten mittels Blockchain speichern kann, um somit die Fälschungssicherheit zu erhöhen.

Von Vorteil ist es, wenn das Authentifizierungsmodul derart ausgebildet und eingerichtet ist, dass es einen Zugang der Teilnehmer zur Videokonferenz erlauben oder verweigern kann. Beispielsweise kann das Authentifizierungsmodul eine Liste mit Teilnehmern umfassen, welche an der Videokonferenz teilnehmen dürfen, so dass allen anderen Personen der Zugang verweigert wird. Zusätzlich oder alternativ kann das Authentifizierungsmodul auch eine Liste mit Teilnehmern umfassen, welche nicht an der Videokonferenz teilnehmen dürfen, so dass diesen Personen der Zugang verweigert wird.

Vorgeschlagen wird ferner ein Verfahren zum Durchführen einer Videokonferenz, wobei das Verfahren mittels eines Videokonferenz-Systems durchgeführt wird. Das Videokonferenz-System ist dabei gemäß einem oder mehreren Merkmalen der vorangegangenen und/oder nachfolgenden Beschreibung ausgebildet.

Beim Verfahren werden dem Videokonferenz-System zugrundeliegenden Befehle von einem als Software realisierten Videokonferenzserver gesteuert. Außerdem wird beim Verfahren ein als Software realisiertes Beschlussermittlungsmodul zum Ermitteln von Beschlüssen auf Basis einer Abstimmung durch stimmberechtigte und mit dem Videokonferenzserver verbundene Videokonferenz-Teilnehmer eingesetzt.

Beim Verfahren wird ein jeweiliger Videokonferenz-Teilnehmer mit Hilfe zumindest eines als Software realisierten Authentifizierungsmoduls authentifiziert.

Ferner wird beim Verfahren zumindest ein als Software realisiertes Abstimmungsmodul zum Abgeben und Erfassen der Stimmen von für die Abstimmung vorgesehenen Videokonferenz-Teilnehmern eingesetzt, wobei von dem Abstimmungsmodul die Stimmen in digitalisierter Form an das Beschlussermittlungsmodul übermittelt werden und das Beschlussermittlungsmodul ausgebildet und eingerichtet ist, eine digitalisierte Stimme eines Videokonferenz-Teilnehmers erst dann zur Ermittlung des Beschlusses zuzulassen, wenn die entsprechende digitalisierte Stimme mit einer Authentifizierung des entsprechenden Teilnehmers eingeht, vorzugsweise zusammen und gemäß einer vorteilhaften Ausführungsform in einem gemeinsamen Datenpaket.

Das Fassen bzw. das Ermitteln der Beschlüsse erfolgt hier in digitalisierter Form. Das heißt, dass die Abstimmung, die Stimmen, die Authentifizierung und die Beschlussfassung bzw. Beschlussermittlung in digitalisierter Form vorliegen. Auch die Dokumentation und die Protokollierung liegt in digitalisierter Form vor.

Weitere Vorteile der Erfindung sind in dem nachfolgenden Ausführungsbeispiel beschrieben. Es zeigt:

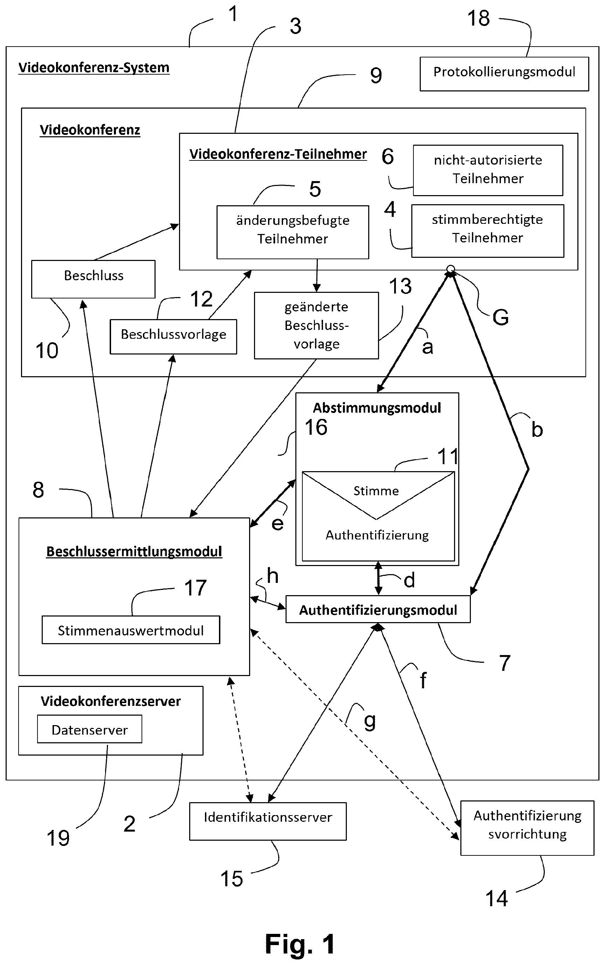

- **Figur 1**: ein Flussdiagramm einer Beschlussfassung mittels eines Vide-okonferenz-Systems.

In Figur 1 ist ein Flussdiagramm einer Beschlussermittlung mittels eines Videokonferenz-Systems 1 gezeigt. Das hier vorgeschlagene Videokonferenz-system 1 dient insbesondere dazu, Beschlüsse 10 in einer Videokonferenz 9 zu ermitteln, die von abstimmenden Teilnehmern gefasst werden.

Das Videokonferenz-System 1 umfasst einen als Software realisierten Videokonferenzserver 2 zum Steuern der dem Videokonferenz-System 1 zugrundeliegenden Befehle. Beispielsweise kann der Videokonferenzserver 2 die Audio- und/oder Videoströme der Videokonferenz 9 empfangen und wieder verteilen, beispielsweise in einem sog. Einzelstrom (single stream). Der Videokonferenzserver 2 kann gemäß dem vorliegenden Ausführungsbeispiel einen Datenserver 19 umfassen. Der Datenserver 19 kann derart ausgebildet und eingerichtet sein, Daten zu empfangen und entsprechende Datenströme, welche vorzugsweise für das Fassen von Beschlüssen 10 und für Abstimmungen genutzt werden können, aufzubereiten und zu verteilen.

Das Videokonferenz-System 1 umfasst ferner zumindest ein als Software realisiertes Authentifizierungsmodul 7 zum Authentifizieren von Videokonferenz-Teilnehmern 3 (auch einfach als "Teilnehmer 3" bezeichnet). Mit Hilfe des Authentifizierungsmoduls 7 können die Identitäten der Videokonferenz-Teilnehmer 3 ermittelt werden. Dies ist dahingehend wichtig, da es nicht zwangsläufig so ist, dass alle Videokonferenz-Teilnehmer 3 bei einem Beschluss 10 mit abstimmen dürfen. So gibt es gemäß dem vorliegenden Ausführungsbeispiel beispielweise drei Gruppen von Videokonferenz-Teilnehmern 3. Teilnehmer 3, welche bei den Beschlüssen 10 mit abstimmen dürfen, werden als stimmberechtigte Teilnehmer 4 bezeichnet. Beispielsweise dürfen bei Gesetzen lediglich Abgeordnete oder bei Vereinsangelegenheiten Vereinsmitglieder abstimmen. Daneben gibt es die Gruppe der änderungsbefugten Teilnehmer 5. Diese Gruppe der änderungsbefugten Teilnehmer 5 kann sich mit den stimmberechtigten Teilnehmern 4 überschneiden. Beispielsweise ist es möglich, dass bei Vereinen lediglich die Vorstandsmitglieder einen Beschluss 10 bzw. einen zur Abstimmung anstehenden Beschluss 10 ändern dürfen. Die Vorstandsmitglieder dürfen darüber hinaus aber auch selbst abstimmen. Daneben können auch nicht-autorisierte Teilnehmer 6 an der Videokonferenz 9 teilnehmen. Diese nicht-autorisierten Teilnehmer 6 dürfen beispielsweise nicht über Gesetze oder Vereinsangelegenheiten abstimmen. Die nicht-autorisierten Teilnehmer 6 können jedoch die Abstimmung beobachten und eventuell Kommentare einbringen.

Mit Hilfe des Authentifizierungsmoduls 7 können die Teilnehmer 3 authentifiziert werden. Insbesondere kann dadurch ermittelt werden, ob ein entsprechender Teilnehmer 3 abstimmen darf oder nicht.

Ferner umfasst das Videokonferenz-System 1 ein Beschlussermittlungsmodul 8 zum Fassen bzw. Ermitteln von Beschlüssen 10 von Videokonferenz-Teilnehmern 3 und vorzugsweise deren Dokumentation, wobei an das Beschlussermittlungsmodul 8 die digitalisierten Stimmen 11 der Videokonferenz-Teilnehmer 3 übermittelt werden. Das Beschlussermittlungsmodul 8 ist gemäß einer Variante des vorliegenden Ausführungsbeispiels derart ausgebildet und eingerichtet, dass es eine digitalisierte Stimme 11 eines Videokonferenz-Teilnehmers 3 erst dann wertet, wenn diese mit einer Authentifizierung des entsprechenden Teilnehmers 3 eingeht.

Das Videokonferenz-System 1 umfasst zumindest ein als Software realisiertes Abstimmungsmodul 16, das digitalisierte Stimmen 11 der Videokonferenz-Teilnehmer 3, insbesondere die Stimmen 11 der stimmberechtigten Teilnehmer 4, erfassen kann. Das Abstimmungsmodul 16 übermittelt die digitalisierten Stimmen 11 der Videokonferenz-Teilnehmer 3, vorzugsweise zusammen mit deren jeweiliger Authentifizierung, an das Beschlussermittlungsmodul 8 (s. Doppelpfeil e zwischen dem Abstimmungsmodul 16 und dem Beschlussermittlungsmodul 8). Gemäß dem Ausführungsbeispiel der Fig. 1 kann das Abstimmungsmodul 16 auch erfassen, ob die abgegebene Stimme 11 zu einem entsprechend authentifizierten Teilnehmer gehört, indem es die entsprechenden Informationen vom Authentifizierungsmodul 7 anfordert und die bestätigte Authentifizierung von diesem empfängt (s. Doppelpfeil d). Dann kann das Abstimmmodul 16 die digitalisierte Stimme 11 zusammen mit der zugehörigen Authentifizierung an das Beschlussermittlungsmodul 8 senden (s. Doppelpfeil e). Gemäß einer Alternative wird die Authentifizierung vom Authentifizierungsmodul 7 direkt zum Beschlussermittlungsmodul 8 gesendet (s. Doppelpfeil h).

Als alternative oder zusätzliche Möglichkeit, wie in der Figur 1 dargestellt, kann ein abstimmender Teilnehmer 3, insbesondere ein stimmberechtigter Teilnehmer 4, sowohl seine digitalisierte Stimme 11 an das Abstimmungsmodul 16 (s. Doppelpfeil a) als auch eine Authentifizierungsanforderung an das Authentifizierungsmodul 7 (s. gestrichelten Doppelpfeil b) senden, wobei diese Daten zusammen, insbesondere gleichzeitig, gesendet werden (angedeutet durch den Punkt "G" beim Teilnehmer 3). Vorzugsweise wird dann das Ergebnis der Authentifizierung (z.B. mit Hilfe einer Authentifizierungsvorrichtung 14 oder einem Identitätsserver 15, s. jeweils unten) vom Authentifizierungsmodul 7 zum Abstimmungsmodul 16 gesendet (s. Doppelpfeil d), dort mit der Stimme 11 verbunden und an das Beschlussermittlungsmodul 8 gesendet (s. Doppelpfeil e), vorzugsweise in einem gemeinsamen Datenpaket. Gemäß einer Alternative wird die digitalisierte Stimme 11 vom Abstimmungsmodul 16 (s. Doppelpfeil e) und die Authentifizierung vom Authentifizierungsmodul 7 (s. Doppelpfeil h) zum Beschlussermittlungsmodul 8 gesendet.

Es ist auch möglich, dass ein Teilnehmer 3, insbesondere ein stimmberechtigter Teilnehmer 4, zuerst seine Stimme 11 abgibt oder zu erkennen gibt, dass er seine Stimme abgeben möchte, und dann vom Abstimmungsmodul 16 (s. Doppelpfeil a) oder vom Beschlussermittlungsmodul 8 (s. Doppelpfeile a, e) aufgefordert wird, sich entsprechend zu authentifizieren. Diese Überprüfung kann der Teilnehmer 3 dann insbesondere mit Hilfe des Authentifizierungsmoduls 7 (und ggf. weiterer Hilfsmittel, s. unten zur Authentifizierungsvorrichtung 14 und zum Identifikationsserver 15) vornehmen, wobei das Authentifizierungsmodul 14 von dieser Anforderung über verschiedene Übertragungswege erfahren kann (s. Doppelpfeile a, d; s. Doppelpfeil oder b) und die Authentifizierung beispielsweise an den Teilnehmer 3 zurückschickt (s. Doppelpfeil b). Anschließend kann der Teilnehmer 3 seine Stimme 11 - oder bei schon zuvor an das Abstimmungsmodul 16 erfolgter Stimmabgabe eine Bestätigung derselben - zusammen mit der Authentifizierung zum Abstimmungsmodul 16 (s. Doppelpfeil a, e) senden, welches dann die Stimme 11 und die Authentifizierung vorzugsweise zusammen an das Beschlussermittlungsmodul 8 sendet.

Das Authentifizierungsmodul 7, das Beschlussermittlungsmodul 8 und auch das Abstimmungsmodul 16 können auf einem oder mehreren Servern realisiert sein, beispielsweise dem Videokonferenzserver 2, auch wenn diese in der Fig. 1 getrennt von diesem dargestellt sind.

Wenn die digitalisierte Stimme 11 mit der Authentifizierung beim Beschlussermittlungsmodul 8 eingeht, besonders bevorzugt in Form eines Datenpakets (angedeutet in Fig. 1 als "Stimme + Authentifizierung" in einem symbolischen Briefumschlag), ist die Sicherheit der Abstimmung erhöht. Andernfalls bestünde die Gefahr, dass Personen die Möglichkeit der Manipulation der Abstimmung eröffnet wird. Beispielsweise könnten derartige Personen, auch Manipulatoren genannt, sich nach der Authentifizierung unerlaubten Zugang, auch physischen Zugang, zum Computer des entsprechenden Teilnehmers 3, insbesondere eines stimmberechtigten Teilnehmers 4 oder eines änderungsbefugten Teilnehmers 5 verschaffen, um die Abstimmung mit einer eigenen Stimmabgabe zu manipulieren. Eine derartige Gefahr wird durch das Verbinden der Stimmabgabe mit der Authentifizierung minimiert. Nicht dargestellt ist in der Fig. 1, dass vom Videokonferenz-System 1 oder vom Beschlussermittlungsmodul 8 für oder bei der Stimmabgabe eine Authentifizierung durch das Authentifizierungsmodul 7 angefordert werden kann. Der abstimmende Teilnehmer 4, 5 kann sich dann beispielsweise auf Basis eines Captchas, auf Basis von Passwörtern, auf Basis einer doppelten Verifikation bzw. Zwei-Faktor-Authentifikation, auf Basis von biometrischen Daten, wie beispielsweise Fingerabdrücke, Gesichtserkennung, Iriserkennung usw. oder auf Basis von anderen Zugangssystemen, wie einer Bürgerkarte, einer Ordinationskarte, einer allgemeinen zertifizierten Authentifizierungsstelle, einer Smartphone-Signatur, authentifizieren. Insbesondere die Authentifizierung mittels biometrischer Daten gilt als sehr sicher, da der entsprechende Teilnehmer anwesend sein muss. Der Ablauf des Versendens von Stimme und Authentifizierung und/oder deren Eingang beim Beschlussermittlungsmodul 8 erfolgt erfindungsgemäß.

Auf zusätzliche oder alternative Weise kann die Authentifizierung mittels einer Authentifizierungsvorrichtung 14 erfolgen, welche mit dem Authentifizierungsmodul 7 verbunden ist und/oder verbunden werden kann, wobei das Authentifizierungsmodul 7 eine entsprechende Authentifizierung von der Authentifizierungsvorrichtung 14 anfordert und diese dann ggf. auch selber empfängt und an das Abstimmungsmodul 16 weiterleitet. Die Authentifizierungsvorrichtung 14 kann beispielsweise ein Kartenlesegerät, ein Fingerabdrucksensor und/oder eine Kamera zur Gesichtserkennung umfassen. Gemäß dem vorliegenden Ausführungsbeispiel befindet sich die Authentifizierungsvorrichtung 14 außerhalb des Videokonferenz-Systems 1. Alternativ kann die Authentifizierungsvorrichtung 14 auch Teil des Videokonferenz-Systems 1 sein.

Des Weiteren kann das Authentifizierungsmodul 7 mit einem hier gezeigten Identifikationsserver 15 verbunden sein und/oder verbunden werden, wobei das Authentifizierungsmodul 7 eine entsprechende Authentifizierung von dem Identifikationsserver 15 anfordert und diese dann ggf. auch selber empfängt und an das Abstimmungsmodul 16 weiterleitet. Der Identifikationsserver 15 kann beispielsweise ein Amtsserver sein, auf dem die Identitäten der Teilnehmer 3 hinterlegt sind. Das Authentifizierungsmodul 7 und/oder das Beschlussermittlungsmodul 8 und/oder das Videokonferenz-System 1 können die mittels des Authentifizierungsmoduls 7 und/oder mittels der Authentifizierungsvorrichtung 14 erfasste Authentifizierung am Identifikationsserver 15 verifizieren. Beispielsweise kann ermittelt werden, zu welcher der oben genannten Gruppe aus Teilnehmern 4 - 6 der authentifizierte Teilnehmer 3 gehört. Mittels Speicherung der Identität auf dem Identifikationsserver 15 kann die Sicherheit der Abstimmung erhöht werden, da sich eine Person, welche die Abstimmung manipulieren will, zusätzlich zum Videokonferenz-System 1 auch Zugang zum Identifikationsserver 15 verschaffen muss.

Mit gestrichelten Linien von der Authentifizierungsvorrichtung 14, vom Identifikationsserver 15 und vom Authentifizierungsmodul 7 zum Beschlussermittlungsmodul 8 ist angedeutet, dass die Authentifizierung auch direkt und unabhängig vom Abstimmungsmodul 16 von diesen Modulen 14, 15 bzw. 7 zum Beschlussermittlungsmodul 8 gesendet werden kann, wobei dann allerdings vorausgehend der Teilnehmer 3 sowohl seine Stimme als auch die entsprechende Authentifizierungsanforderung zusammen gesendet hat.

Des Weiteren umfasst das Beschlussermittlungsmodul 8 des vorliegenden Ausführungsbeispiels ein als Software realisiertes Stimmenauswertmodul 17, welches die erfassten Stimmen 11 auswerten und anhand der Auswertung den Beschluss 10 ermitteln bzw. feststellen kann. Beispielsweise kann das Stimmenauswertmodul 17 ein Verhältnis der Stimmen 11 bilden und anhand des Stimmverhältnisses ermitteln, ob der Beschluss 10 angenommen oder abgelehnt ist.

Nachdem das Beschlussermittlungsmodul 8 den Beschluss 10 ermittelt bzw. festgestellt hat, kann es diesen an die Videokonferenz 9 übermitteln, um es für die Teilnehmer 3 der Videokonferenz 9 zu veröffentlichen. Dies kann zusammen mit der Anzahl der digitalisierten Stimmen 11, der Anzahl der digitalisierten Ja- und Nein-Stimmen 11 und/oder dem Verhältnis der digitalisierten Stimmen 11 erfolgen. Zusätzlich oder alternativ kann der Beschluss 10 zusammen mit den Authentifizierungen der an der Abstimmung teilgenommenen Teilnehmer 3 erfolgen, so dass für jeden einsehbar ist, wer mit welcher Authentifizierung abgestimmt hat.

Außerdem kann von dem Beschlussermittlungsmodul 8 auch eine Beschlussvorlage 12 an die Videokonferenz 9 übermittelt werden, um diese vorab für die Teilnehmer 3 zu veröffentlichen. Die Beschlussvorlage 12 kann ein Entwurf des zu fassenden Beschlusses 10 sein, über den die Teilnehmer 3 dann abstimmen werden. Die Beschlussvorlage 12 ist somit beispielsweise ein Vorschlag über ein neues Gesetz oder eine Vereinsangelegenheit, über die abgestimmt werden soll. Natürlich besteht auch die Möglichkeit, dass die Teilnehmer 3 anhand der Beschlussvorlage 12 beschließen, dass nicht bzw. noch nicht über die Beschlussvorlage 12 abgestimmt wird.

Vorteilhafterweise können die Teilnehmer 3 die Beschlussvorlage 12 ändern, so dass eine geänderte Beschlussvorlage 13 erstellt wird. Diese kann zurück an das Beschlussermittlungsmodul 8 übermittelt werden und wieder als Beschlussvorlage 12 den Teilnehmern 3 vorgelegt werden. Dies kann dann nötig sein, wenn lediglich die änderungsbefugten Teilnehmer 5 die Beschlussvorlage 12 geändert haben. Dadurch wird die neue Beschlussvorlage 12 an die restlichen Teilnehmer 3 veröffentlicht, so dass diese darüber abstimmen können.

Das Beschlussermittlungsmodul 8 kann weiterhin auch derart ausgebildet und eingerichtet sein, dass es eine Dokumentation des Verfahrens des Fassens des Beschlusses 10 erstellen kann.

Ferner kann gemäß dem vorliegenden Ausführungsbeispiel das Videokonferenz-System 1 ein als Software ausgebildetes Protokollierungsmodul 18 umfassen, welcher die Ereignisse der Videokonferenz 9 protokollieren kann. Ferner kann auch mittels des Protokollierungsmoduls 18 die Fassung des Beschlusses protokolliert werden.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Videokonferenz-System
- 2: Videokonferenzserver
- 3: Videokonferenz-Teilnehmer
- 4: stimmberechtigte Teilnehmer
- 5: änderungsbefugte Teilnehmer
- 6: nicht-autorisierte Teilnehmer
- 7: Authentifizierungsmodul
- 8: Beschlussermittlungsmodul
- 9: Videokonferenz
- 10: Beschluss
- 11: Stimme
- 12: Beschlussvorlage
- 13: geänderte Beschlussvorlage
- 14: Authentifizierungsvorrichtung
- 15: Identifikationsserver
- 16: Abstimmungsmodul
- 17: Stimmenauswertmodul
- 18: Protokollierungsmodul
- 19: Datenserver
- G: gemeinsames Senden

## Patentansprüche

1. Videokonferenz-System (1) zum Durchführen einer Videokonferenz (9) umfassend:
einen als Software realisierten Videokonferenzserver (2) zum Steuern der dem Videokonferenz-System (1) zugrundeliegenden Befehle,
ein als Software realisiertes Beschlussermittlungsmodul (8) zum Ermitteln von Beschlüssen (10) auf Basis einer Abstimmung durch stimmberechtigte, mit dem Videokonferenzserver (2) verbundene Videokonferenz-Teilnehmer (3; 4 - 6),
zumindest ein als Software realisiertes Authentifizierungsmodul (7) zum Authentifizieren der Videokonferenz-Teilnehmer (3; 4 - 6) und
zumindest ein als Software realisiertes Abstimmungsmodul (16) zum Erfassen der Stimmen (11) von den für die Abstimmung vorgesehenen Videokonferenz-Teilnehmern (3; 4 - 6), wobei von dem Abstimmungsmodul (16) die Stimmen (11) in digitalisierter Form an das Beschlussermittlungsmodul (8) übermittelt werden und das Beschlussermittlungsmodul (8) ausgebildet und eingerichtet ist, eine digitalisierte Stimme (11) eines Videokonferenz-Teilnehmers (3; 4 - 6) erst dann zur Ermittlung des Beschlusses zuzulassen, wenn die entsprechende digitalisierte Stimme (11) zusammen mit einer digitalen Authentifizierung oder Authentifizierungsanforderung des entsprechenden Teilnehmers (3; 4 - 6) von diesem gesendet wird und/oder beim Beschlussermittlungsmodul (8) eingeht.

2. Videokonferenz-System (1) nach Anspruch 1, **dadurch gekennzeichnet, dass** die digitalisierte Stimme (11) jedes abstimmenden Teilnehmers (3; 4 - 6) und dessen Authentifizierung oder Authentifizierungsanforderung in einem gemeinsamen Datenpaket gesendet werden und/oder beim Beschlussermittlungsmodul (8) eingehen.

3. Videokonferenz-System (1) nach Anspruch 1 oder 2, **dadurch gekennzeichnet, dass** nach der oder als Voraussetzung für die Abgabe der Stimme (11) eines abstimmenden Teilnehmers (3; 4 - 6) ohne Authentifizierung das Beschlussermittlungsmodul (8) oder das Abstimmungsmodul (16) eine entsprechende Authentifizierung anfordert, wobei eine Stimme nur dann als abgegeben gilt, wenn diese Stimme dann zusammen mit der besagten Authentifizierung oder Authentifizierungsanforderung des entsprechenden Teilnehmers (3; 4 - 6) von diesem gesendet und/oder beim Beschlussermittlungsmodul (8) eingeht.

4. Videokonferenz-System (1) nach einem oder mehreren der vorherigen Ansprüche, **dadurch gekennzeichnet,**
**dass** das Videokonferenz-System (1) mehrere Authentifizierungsmodule (7) umfasst, wobei zumindest den für die Abstimmung vorgesehenen Videokonferenz-Teilnehmern (3; 4 - 6) vorzugsweise jeweils ein Authentifizierungsmodul (7) zugeordnet ist, und/oder
**dass** das Videokonferenz-System (1) mehrere Abstimmungsmodule (16) umfasst, wobei zumindest den für die Abstimmung vorgesehenen Videokonferenz-Teilnehmern (3; 4 - 6) vorzugsweise jeweils ein Abstimmungsmodul (16) zugeordnet ist.

5. Videokonferenz-System (1) nach einem oder mehreren der vorherigen Ansprüche, **dadurch gekennzeichnet, dass** das Authentifizierungsmodul (7) mit einer beim Teilnehmer (3; 4 - 6) vorgesehenen Authentifizierungsvorrichtung (14) verbunden und/oder verbindbar ist, wobei die Authentifizierungsvorrichtung (14) vorzugsweise ein Biometrikscanner, ein Kartenscanner und/oder eine Kamera ist, und/oder dass das Authentifizierungsmodul (7) ausgebildet und eingerichtet ist, ein Captcha, ein Passwort, biometrische Daten und/oder Zugangsdaten zur Videokonferenz (9) von den Teilnehmern (3; 4 - 6) zur Authentifizierung abzufragen.

6. Videokonferenz-System (1) nach einem oder mehreren der vorherigen Ansprüche, **dadurch gekennzeichnet, dass** das Beschlussermittlungsmodul (8) ausgebildet und eingerichtet ist, die Abstimmung und/oder den gefassten Beschluss (10) an die Videokonferenz- Teilnehmer (3; 4 - 6) zu übermitteln.

7. Videokonferenz-System (1) nach einem oder mehreren der vorherigen Ansprüche, **dadurch gekennzeichnet, dass** das Authentifizierungsmodul (7) ausgebildet und eingerichtet ist, eine Verbindung zu einem Identifikationsserver (15) herzustellen, um die Teilnehmer (3; 4 - 6) identifizieren zu können, und/oder
dass das Authentifizierungsmodul (7) ausgebildet und eingerichtet ist, die Teilnehmer (3; 4 - 6) kontinuierlich und/oder in Zeitintervallen zu authentifizieren.

8. Videokonferenz-System (1) nach einem oder mehreren der vorherigen Ansprüche, **dadurch gekennzeichnet, dass** das Beschlussermittlungsmodul (8) ausgebildet und eingerichtet ist, eine digitale Beschlussvorlage, Beschlussänderungen und/oder einen gefassten Beschluss, vorzugsweise mit entsprechender digitaler Dokumentation, in digitaler Form zu erstellen und zumindest an die stimmberechtigten Teilnehmer (3; 4 - 6) der Videokonferenz zu übermitteln.

9. Videokonferenz-System (1) nach einem oder mehreren der vorherigen Ansprüche, **dadurch gekennzeichnet, dass** das Beschlussermittlungsmodul (8) ausgebildet und eingerichtet ist, Stimmabgaben von stimmberechtigten, insbesondere authentifizierten, Teilnehmern (4; 5) im Nachgang zu einer Abstimmung mitaufzunehmen.

10. Videokonferenz-System (1) nach einem oder mehreren der vorherigen Ansprüche, **dadurch gekennzeichnet, dass** das Beschlussermittlungsmodul (8) ausgebildet und eingerichtet ist, änderungsbefugten, insbesondere vom Authentifizierungsmodul (7) authentifizierten, Teilnehmern (5) zu ermöglichen, Beschlüsse (10) und/oder Beschlussvorlagen (12) zu ändern.

11. Videokonferenz-System (1) nach einem oder mehreren der vorherigen Ansprüche, **dadurch gekennzeichnet, dass** der Videokonferenzserver (2) ein als Software realisiertes Anmerkungssystem umfasst, das unter Verwendung einer Datenbank ausgebildet und eingerichtet ist, digitale Anmerkungen, vorzugsweise einschließlich Verpflichtungen, der Teilnehmercomputer entgegenzunehmen, zu verwalten und/oder zu speichern.

12. Videokonferenz-System (1) nach einem oder mehreren der vorherigen Ansprüche, **dadurch gekennzeichnet, dass** der Videokonferenzserver (2) ein als Software realisiertes Protokollierungsmodul (18) umfasst, das ausgebildet und eingerichtet ist, ein digitales Protokoll der Beschlussermittlung, ein Protokoll der Videokonferenz (9), ein Protokoll der Beschlüsse (10), ein Protokoll der Beschlussvorlagen (12), ein Protokoll der Beschlussänderungen, ein Protokoll der Authentifizierungen und/oder ein Protokoll der Zertifikate zu erstellen.

13. Videokonferenz-System (1) nach einem oder mehreren der vorherigen Ansprüche, **dadurch gekennzeichnet, dass** der Videokonferenzserver (2) ausgebildet und eingerichtet ist, empfangene und versendete Daten, insbesondere Einträge und/oder Änderungen, der Dokumentation und/oder deren Einträge mit einem Zeitstempel zu versehen, und/oder
dass der Videokonferenzserver (2) ausgebildet und eingerichtet ist, empfangene und/oder versendete Daten mittels Blockchain zu speichern.

14. Videokonferenz-System (1) nach einem oder mehreren der vorherigen Ansprüche, **dadurch gekennzeichnet, dass** das Authentifizierungsmodul (7) ausgebildet und eingerichtet ist, einen Zugang der Teilnehmer (3; 4 - 6) zur Videokonferenz (9) zu erlauben oder zu verweigern.

15. Verfahren zum Durchführen einer Videokonferenz (9), wobei das Verfahren mittels einem Videokonferenz-System (1) nach einem oder mehreren der vorherigen Ansprüche durchgeführt wird.
